# EUROPEAN PATENT SPECIFICATION

(11) **EP 2 281 715 B1**
(45) Date of publication and mention of the grant of the patent: **16.01.2013**
(21) Application number: 09166480.5
(22) Date of filing: 27.07.2009
(51) Int. Cl.: B60N 2/66

(54) **Lumbar support system**
Lendenwirbelstützsystem
Système de support lombaire

(43) Date of publication of application: 09.02.2011
(73) Proprietor: Fico Cables, Lda., 4471 Maia (PT)
(72) Inventor: Castro Faria, Manuel António, 4470-263 Vermoim-Maia (PT); Vilela Barros, João Alberto, 4470-263 Vermoim-Maia (PT)
(74) Representative: Hess, Peter K. G.

(56) References cited:
- EP-A1- 1 680 983
- EP-A1- 1 815 769
- EP-A1- 2 016 867
- WO-A1-2007/145262
- US-A1- 2008 264 425

## Description

### 1. Field of invention

The invention relates to a lumbar support system as it is used in a seat of a motor vehicle, wherein the pressure distribution onto the back of the vehicle passenger can positively be influenced.

### 2. Prior art

Lumbar support systems are known in the prior art. Such lumbar support systems are usually mounted into a seat to give a seat backrest in the lumbar area a certain curved shape. Lumbar support systems are known that have vertically arranged flexible struts, on which a multiplicity of crossbars is mounted. With the help of tension devices (e.g. Bowden cables) the vertically adjustable struts can be bended and the crossbars form a curved shape. Therefore, the curvature can be changed and adapted to meet the needs of the passenger.

From DE 10 030 065 A1 a lumbar support system is known for the use in a vehicle. In this lumbar support system flexural elements are actuated by Bowden cables which are attached to the flexural elements.

From EP 1 491 395 A2 a backrest support structure with pressure map adjustment is known. The lumbar area of this backrest support structure is adjusted by Bowden cables. The variation of the curvature of the lumbar area can be changed by a vertical actuation of the lumbar area. For this purpose, the ends of the conduits of the Bowden cables are inserted into receptacles, which are vertically and rigidly mounted.

The document US 2008/0264425 A1 shows a thin profile adjustable lumber support system, particularly for use in automotive seat backs and other equipment used for sitting and reclining. The lumber support system is assembled utilizing injection molding and overmolding technology to form some components and to connect other components.

However, lumbar support systems of the prior art in some cases require high forces of actuation. Therefore it is quite inconvenient for the passenger to use and adjust the lumbar support system. Usually such high forces are generated by actuation devices that require a couple of rotations for an adjustment. Therefore, in many cases no individual adjustment of the lumbar support is made even if the passengers change.

Accordingly, the problem of the present invention is to provide a lumbar support system which allows the passenger to easily adjust the lumbar support system without much effort.

### 3. Summary of the invention

The above mentioned problem is solved by a lumbar support system according to the subject matters of the independent claims 1 and 2.

Specifically, it is solved by a lumbar support system, comprising a flexible body and a support structure, which can be assembled into a seat backrest frame, wherein the flexible body is fixed at one extremity thereof at the support structure and is displaceable at the other extremity. Furthermore, the lumbar support system comprises at least one Bowden cable comprising a cable and a conduit, wherein the Bowden cable comprises a Bowden cable conduit end fitting which is mounted vertically on the support structure. The cable connects the displaceable extremity of the flexible body with a fixed point on the support structure, wherein an angle between the displaceable extremity of the flexible body and the Bowden cable conduit end fitting changes during adjustment of the flexible body. The support structure has a receptacle for receiving the Bowden cable conduit end fitting, which receptacle has a V-shaped clear cross-section to allow angular variations of the Bowden cable conduit end fitting, such that the portion of said cable connecting the displaceable extremity of the flexible body with the fixed point of the support structure is co-linear to the corresponding Bowden cable conduit end fitting in every adjustment position of the flexible body.

Specifically, the problem is also solved by a lumber support system comprising a flexible body and a support structure, which can be assembled into a seat backrest frame, wherein the flexible body is fixed at one extremity thereof at the support structure and displaceable at the other extremity. Furthermore, the lumber support system comprises at least one Bowden cable comprising a cable and a conduit, wherein the Bowden cable comprises a Bowden cable conduit end fitting which is mounted vertically on the flexible body. The cable connecting the displaceable extremity of the flexible body with a fixed point on the support structure, wherein an angle between the displaceable extremity of the flexible body and the Bowden cable conduit end fitting changes during adjustment of the flexible body. The flexible body has a receptacle for receiving the Bowden cable conduit end fitting, which receptacle is arranged at a flexible strap of the flexible body to allow angular variations between the Bowden cable conduit end fitting and the displaceable extremity of the flexible body, such that the portion of said cable connecting the displaceable extremity of the flexible body with the fixed point of the support structure is co-linear to the corresponding Bowden cable conduit end fitting in every adjustment position of the flexible body.

The applicant recognized that the one of the main reasons for the high actuation forces of lumbar support systems are the friction of the Bowden cable. It has noted that the main Bowden cable friction is generated at the position where the cable exits the conduit.

According to the invention the cable connecting the displaceable extremity of the flexible body with the fixed point of the support structure is now co-linear with the corresponding Bowden cable conduit end fitting in every adjustment position of the flexible body. Therefore, the cable exiting the conduit does apply a normal force to the conduit end fitting such that the friction in that portion of the Bowden cable is eliminated.

This allows that the user of the lumbar support system can now adjust the system with much less effort because of the removed friction. The user uses much less force and rotations of an actuator for adjusting the system. Therefore, the user is able to quickly and conveniently adjust the system to the position he wants.

Furthermore, if an electric actuation the Bowden cables is used the electric motor can be driven with much less power due to the removed friction. This contributes to a much cheaper production of the lumbar support system and also much smaller sizes of the motors.

Further, due to the highly eliminated friction the wear off of the Bowden cable is highly decreased. This allows a much higher reliability and overall lifetime of the lumbar support system.

Since the flexible body adopts different bending positions (i.e. different curvatures) at least one the extremities of the flexible body does not only change its position but also changes its angle with respect to the support structure. In order to eliminate the friction of the Bowden cable usually caused by such an angle change the Bowden cable conduit end fitting is allowed to change its angle to the displaceable extremity of the flexible body.

A particular easy way to provide an angular variable attachment of Bowden cable conduit end fitting is a receptacle that has a shape to allow angular variations of the Bowden cable conduit end fitting.

The V-shape allows angular variations in one direction.

Preferably the angle between the displaceable extremity of the flexible body and the Bowden cable conduit end fitting increases when the flexible body is curved to a greater extend. Furthermore the angle between the displaceable extremity of the flexible body and the Bowden cable conduit end fitting increases when the length of cable connecting the displaceable extremity of the flexible body with the fixed point on the support structure is shortened. The Bowden cable conduit end fitting compensates a higher curvature of the flexible body increasing the angle to the displaceable extremity of the flexible body. Therefore, the cable exits the conduit end fitting co-linearly and does not generate a friction.

In a first embodiment the Bowden cable conduit end fitting is attached to the support structure wherein an angle between the Bowden cable conduit end fitting and the support structure varies during adjustment of the flexible body. In the first embodiment the angle between the Bowden cable conduit end fitting and the support structure varies during adjustment. To this end, the Bowden cable conduit end fitting is attached to the support structure in an angular variable manner.

In a preferred embodiment the support structure is an integral plastic bridge element attached to a surrounding metal wire frame that can be assembled into a seat backrest frame. In this embodiment the support structure is a stiff plastic bridge element that is very lightweight and can be produced easily. The plastic bridge element that carries the flexible body is mounted to a surrounding metal wire frame of a common structure.

In a preferred embodiment the plastic bridge element has top connecting elements which clip on the metal wire frame and wherein at least two top connecting elements are clipped on the revolving metal wire frame but with a lateral freedom.

This provides lateral free-play of the plastic bridge element in the metal wire frame to provide more flexibility of the lumbar support system in that area.

In a preferred embodiment the plastic bridge is constrained on the metal wire frame by button connecting elements between two "V"-shape bendings on wires.

In a preferred embodiment the support structure is mounted on the metal wire frame by hooks, which are arranged perpendicular to the plane of the metal wire frame. This allows a fast and secure mounting of the lumbar support system at the backrest of a vehicle seat.

In a particularly preferred embodiment the support structure comprises a first bended metal wire of staggered U-shape which is overmolded with plastics on interface areas with the seat backrest frame, wherein the first bended metal wire is mounted on the seat backrest frame at two upper connection points and one lower connection point.

In a particularly preferred embodiment a second metal wire is attached to the first metal wire by overmolding with plastics on a lower end of the first metal wire, wherein the second metal wire supports an overmolded receptacle for mounting the cable end fitting. By overmolding a second metal wire very rigid support structure for connecting the cable of the Bowden cable is provided.

Further preferred embodiments are described in the sub-claims.

### 4. Short description of the drawings

In the following, two preferred embodiments of the invention are shown in the accompanying drawings, in which:
- Fig. 1: shows a general way how a lumbar support system is integrated into a backrest of a vehicle seat;
- Fig. 2: shows a first embodiment of the lumbar support system according to the invention;
- Fig. 3: shows a side view of the first embodiment in a high and low curved position;
- Fig. 4: shows the support structure of the first embodiment;
- Fig. 5A: shows a structural side view of the first embodiment of the present invention
- Fig. 5B: shows a structural side view of a second embodiment of the present invention;
- Fig. 6: shows the lumbar support system according to the second embodiment of the present invention;
- Fig. 7A: shows a structural side view of the second embodiment during lumbar adjustment with low curvature
- Fig. 7B: shows a structural side view of the second embodiment during lumbar adjustment with high curvature; and
- Fig. 8: shows the support structure of the second embodiment.

### 5. Detailed description of the preferred embodiments

In the following preferred embodiments of the present invention are described in detail with respect to the drawings.

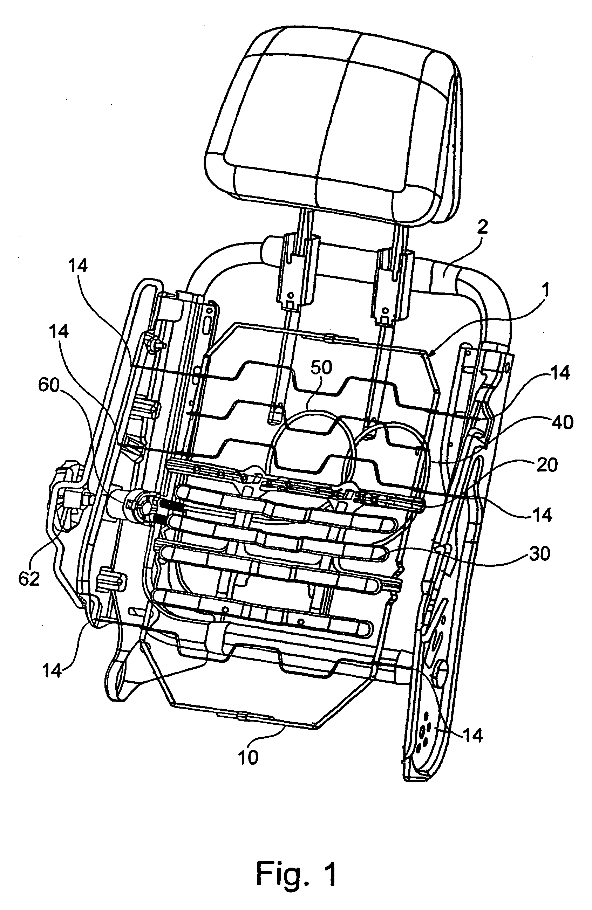

Fig. 1 shows a seat backrest frame 2 and an integrated lumbar support system 1 according to the first embodiment. The general arrangement of the lumbar support system 1 in the seat backrest frame 2 also applies for the lumbar support system 100 of a second embodiment. The lumbar support system 1 is hooked into the seat backrest frame 2 by hooks 14 that extend horizontal from the lumbar support system 1.

The lumbar support system 1 comprises a flexible body 30 that is attached to a stiff support structure 20. In order to adjust the curvature of the flexible body 30 the lumbar support system 1 further comprises an actuator 60 that is manually actuated via a hand wheel 62 by a passenger. The actuation force of the actuator is transmitted to the flexible body 30 via two Bowden cables 40, 50. The Bowden cables 40, 50 each comprise a surrounding conduit 42 with a conduit end fitting 46 and an inner cable 44 with a cable end fitting 48. The adjustment of the curvature of the flexible body 30 allows the adjustment of the lumbar support system 1 to the comfort needs of the passenger.

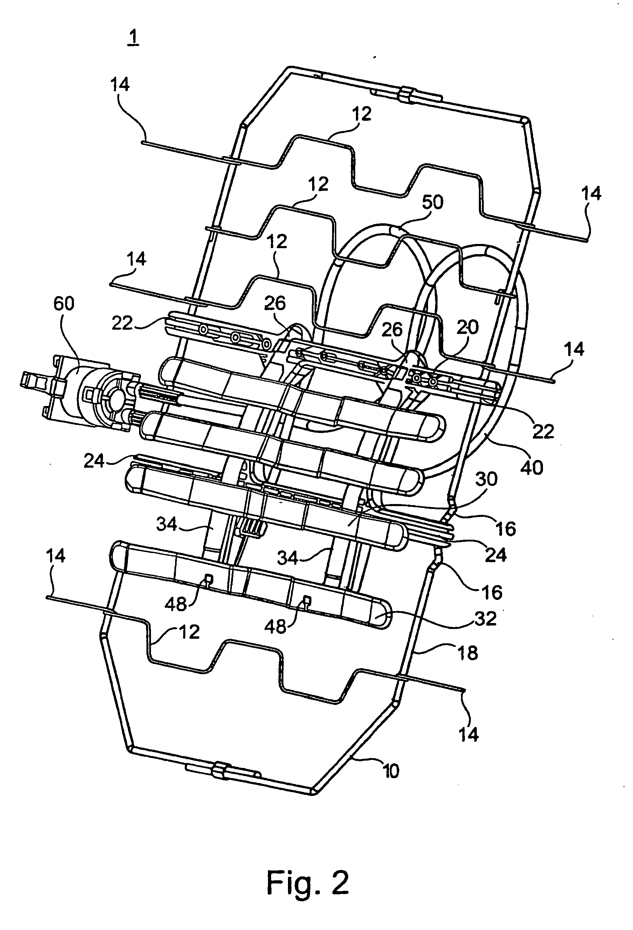

Fig. 2 shows the first embodiment of the lumbar support system 1 in more detail. The lumbar support system 1 comprises a surrounding metal wire frame 10 that is assembled into a seat backrest frame 2 by means of the hooks 14 or other connecting elements.

The flexible body 30 comprises of two flexible struts or conduits 34 with a multiplicity of horizontal support elements 32 which are stacked over a plastic coating of the struts 34. The two flexible struts 34 are attached at one fixed extremity 38 to the support structure 20 at a fixed receptacle 26. The horizontal support elements 32 support the backrest cushioning in the desired and adjusted shape.

The lowest one of the horizontal support elements 32 is connected to two cables end fittings 48 of corresponding Bowden cables 40, 50. The support structure 20 has a receptacle 28 for receiving the Bowden cable conduit end fitting 46. In this embodiment the receptacle 28 provides a fixed point 28 on the support structure.

The flexible body 30 can likewise be an integral plastic part of a one piece support structure as it is disclosed in the above mentioned EP 1 491 395 A2.

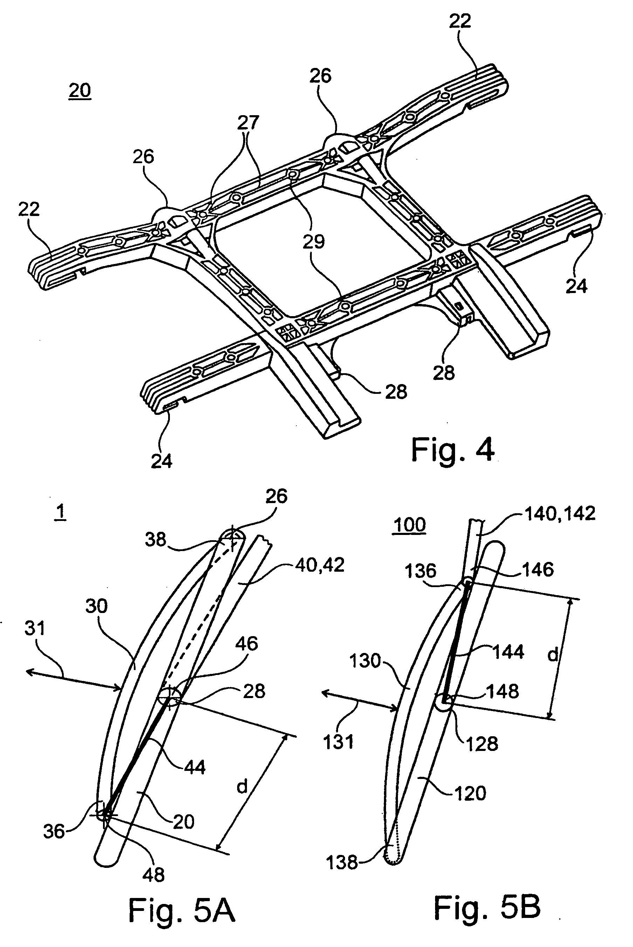

In order to adjust the curvature of the flexible body 30, the length d of the cable connecting the displaceable extremity 36 of the flexible body 30 with the receptacle 28 is varied, as it can be seen in Fig. 5A. The shorter length d is adjusted the higher the curvature of flexible body 30, as indicated by arrow 31.

The support structure 20 is mounted on the surrounding metal wire frame 10 between two V-shaped bendings 16 on lateral wires 18. This arrangement fixes the support structure 20 at the desired height within the wire frame 10.

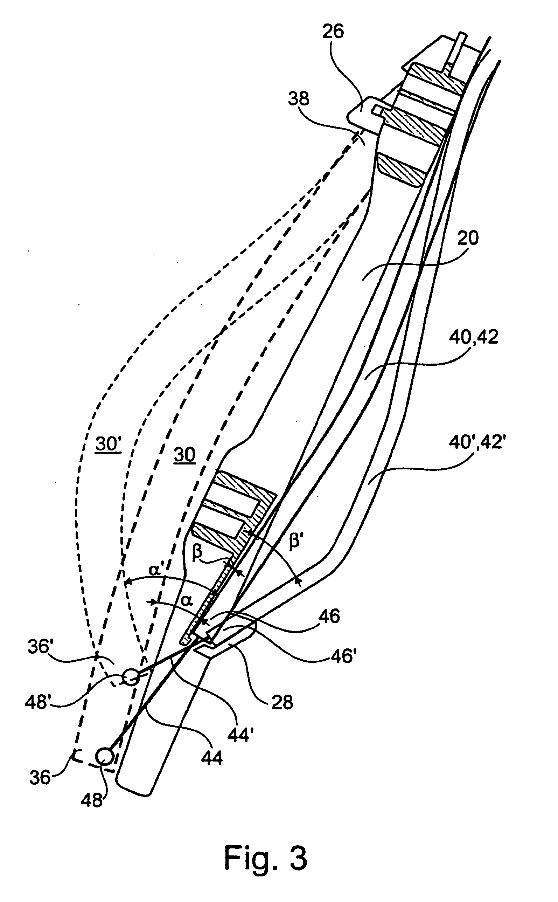

Fig. 3 shows a side view of the lumbar support system 1 in a high and low curved position. In order to allow angular variations of the Bowden cable conduit end fitting 46, the receptacle 28 has a V-shaped clear cross section as shown in Fig. 3. Therefore, during lumbar adjustment of the flexible element 30, i.e. from position 30 to 30', the angle α between the displaceable extremity 36 flexible body 30 and the Bowden cable conduit end fitting 46 changes. This guaranties that in every adjustment position of the lumbar support element 1 the cable 44, 44' is co-linear to the corresponding Bowden cable conduit end fitting 46, 46'. This eliminates friction of the corresponding Bowden cable 40, 50 to a high extend and allows an easy adjustment of the lumbar support system 1.

During lumbar adjustment if the flexible body 30 gets more curved from position 30 to position 30' the angle α increases to α' and also the angle β between the Bowden cable conduit end fitting 46, 46' and the support structure 20 increases to angle β'. The increase in angles α and β is made possible by the V-shaped receptacle 28. The receptacle 28 allows angular variations of the conduit end fitting 46 and allows that the Bowden cable conduit 42 can change its position from 42 to 42'. Therefore, an automatic co-linearity adjustment of the cable 44, 44' to the corresponding Bowden cable conduit end fitting 46, 46' is provided.

Fig. 4 shows the support structure 5 according to the first embodiment in detail. The support structure 5 is made of an integral plastic part that has a general #-shape of four intersected bars. To increase stiffness the plastic support structure is provided with integral stiffening ribs 27 and stiffening tubes 29. It further comprises two top connecting elements 22 for clipping the support structure 20 on the surrounding metal wire frame 10 and two bottom connecting elements 24 for clipping the support structure 20 on the lateral wires 18 of the wire frame 10.

The top connecting elements 22 are clipped onto the surrounding metal wire frame 20 with a lateral freedom to provide more flexibility in that area. On the lower end of support structure 20 the two V-shaped receptacles 28 for the two Bowden cable conduit end fittings 46 are formed.

Fig. 5A shows a schematic side view of the first embodiment of the lumbar support system 1. It shows that the fixed extremity 38 of the flexible body 30 is fixed to the support structure 20 in a fixed point provided by fixed receptacle 26. The other extremity 36 is displaceable by actuation of the Bowden cable 40. To this end the conduit end fitting 46 is fixed to the support structure 20 on a fixed point provided by receptacle 28. The cable end fitting 48 is attached to the displaceable extremity 36. The distance d describes the length of the cable 44 between the displaceable extremity 36 of the flexible body 30 and the fixed point 28. The distance d changes during adjustment of the curvature the flexible body 30 by means of the Bowden cable 40.

Fig. 5B shows a schematic side view of the second embodiment of the lumbar support system 100. In principle, the second embodiment differs from the first embodiment in the way of the actuation of the flexible body 130 by the Bowden cable 140. In this embodiment the fixed extremity 138 of the flexible body 130 is the lower extremity and fixed to the support structure 120. The upper extremity 136 of the flexible body 130 is displaceable by actuation of the Bowden cable 140. To this end the conduit end fitting 146 is fixed to the displaceable extremity 136 and the cable end fitting 148 is attached to the support structure 120 at a fixed point provided by a receptacle 128. Again the distance d describes the length of the cable 144 between the displaceable extremity 136 of the flexible body 130 and the fixed point 128. The distance d changes during variation of the curvature the flexible body 130 by means of the Bowden cable 140 as indicated by arrow 131.

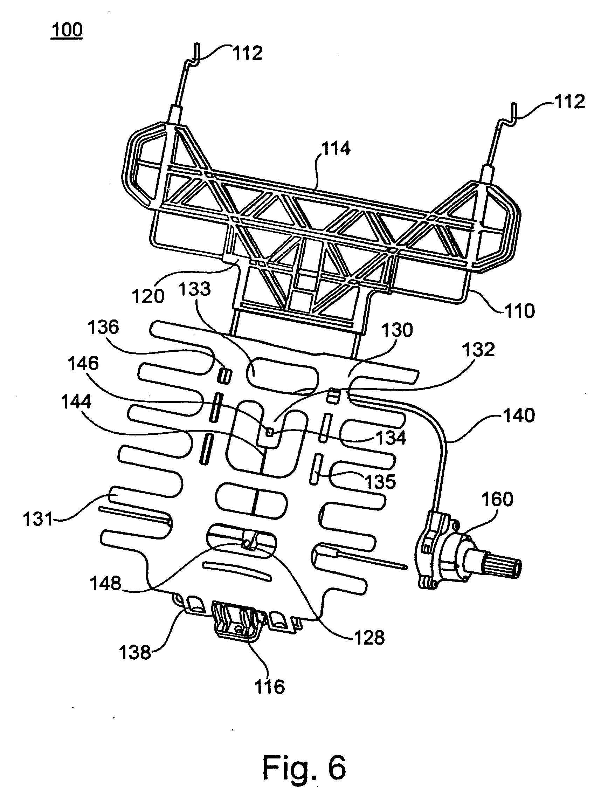

Fig. 6 shows the second embodiment of the lumbar support system 100 in more detail. The lumbar support system 100 according to the second embodiment is mounted directly on the seat backrest frame 2 by means of bended hooks 112 of a support structure 120 or by other injection moulded elements that are fixed with screws or rivets. On the lowest point of the support structure 120 it is fixed by an overmolded attachment means 116 to the seat backrest frame 2 by rivets or screws. Therefore, a three-point connection between lumbar support system 100 and seat backrest frame 2 is provided that reduces the mounting effort significantly.

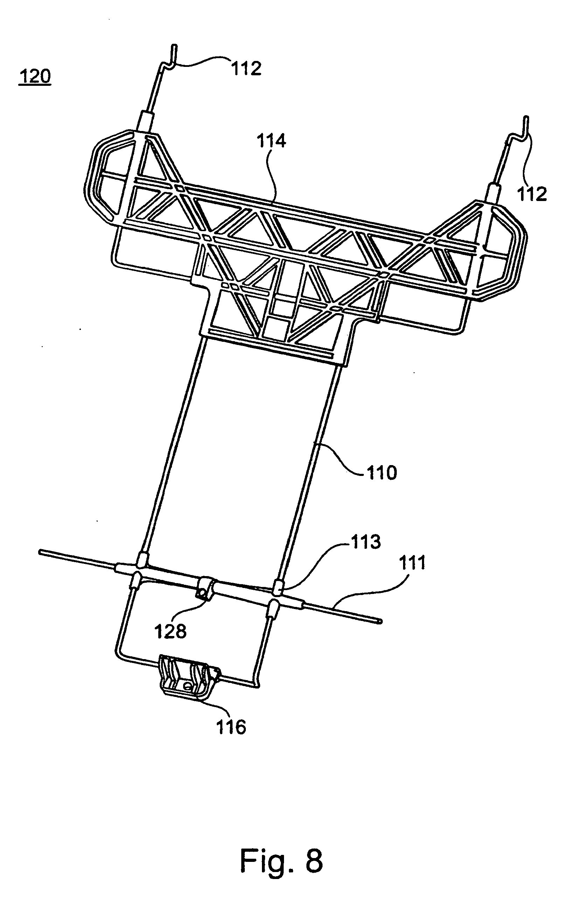

Fig. 8 shows the support structure 120 in more detail. It comprises a U-shaped bended metal wire 110 and is overmolded with plastics on the interface areas 112, 116 with the seat backrest frame 2, for example by overmolded hooks 112 or the attachment means 116. The U-shaped metal wire 110 can also be made of two basically L-shaped wires joined by the lower attachment means 116. The attachment means 116 instead of being overmolded can also be a part clipped on the U-shaped wire 110 or the L-shaped parts thereof.

In the lower area of the support structure 120 a second metal wire 111 is attached to the U-shaped metal wire 110 by overmolding. Onto this second wire 111 a receptacle 128 for a cable end fitting 148 is formed by overmolding.

A flexible body 130 is clipped on the support structure 120 at its lower fixed end of the U-shaped wire 110. This clipping connection provides the fixed extremity 138 of the flexible body 130. The fixed extremity 138 can rotate on the wire 110. Furthermore, the flexible body 130 comprises a displaceable upper end 130. The flexible body 130 is an integrally formed plastic element that has a general flat bendable shape. It is provided with central 133 and lateral holes 135 for aeration of the supported cushioning, reduced weight and improved flexibility. At the lateral sides integral flat fingers 131 extend horizontal to the outside of the flexible body 130 to provide softer support for the cushioning in this lateral area.

Further, the flexible body 130 comprises a flexible strap 132 on which a receptacle 134 for mounting the Bowden cable conduit end fitting 146 is arranged. On the other end the Bowden cable 140 is attached to an actuator 160 for manual actuation of the lumbar support system 100.

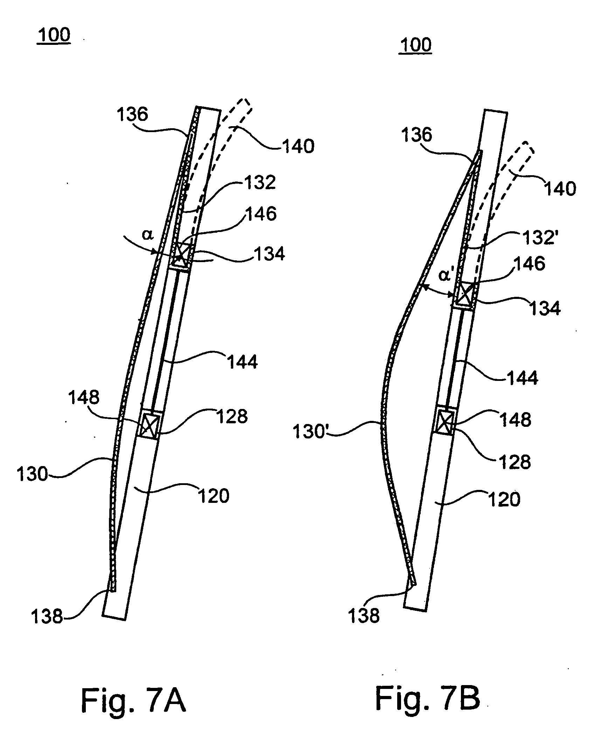

Fig. 7A shows in a schematic side view the second embodiment of the lumbar support system 100 when the flexible body 130 has a low curvature. Fig. 7B shows the second embodiment 100 when the flexible body 130' has a high curvature. During actuation of the lumbar support system 100, the flexible body 130 gets more curved. Accordingly, the displaceable extremity 136 of the flexible body 130 moves downwards, whereas the fixed extremity 138 of the flexible body 130 remains stationary. In order to increase the curvature of the flexible body 130 the cable 144 of the Bowden cable 140 connecting the fixed point 128 on the support structure 120 to the Bowden cable conduit end fitting 146 is tightened.

The comparison of Fig. 7A with Fig. 7B shows that due to the flexible attachment of the Bowden cable conduit end fitting 146 at the displaceable extremity 136 of the flexible body 130 by means of the flexible strap 132 the cable 144 remains co-linear with the Bowden cable conduit end fitting 146. During an increase of the curvature of the flexible body 130 the angle α between the displaceable extremity 136 and the Bowden cable conduit end fitting 146 increases to α'.

This flexible attachment of the Bowden cable conduit end fitting 146 at the displaceable extremity 136 by the flexible strap 132 ensures that the angular change of the displaceable extremity 136 is compensated and the cable 144 remains co-linear with the Bowden cable conduit end fitting 146 such that the friction of the Bowden cable 140 is minimized.

The basic principle of the invention can also be applied to any kind of lumbar support element where the actuating Bowden cables are essentially vertically arranged, for example the lumbar support element of the EP 1 491 395 A2.

### List of reference numbers

- 1, 100: lumbar support system
- 2: seat backrest frame
- 10: surrounding metal wire frame
- 12: wire springs
- 14: hooks
- 16: V-shaped bendings
- 18: lateral wires
- 20, 120: support structure
- 22: top connecting elements
- 24: bottom connecting elements
- 26: fixed receptacle
- 27: stiffening ribs
- 28, 128: fixed point on support structure, receptacle
- 29: stiffening tubes
- 30, 130: flexible body
- 32: horizontal support elements
- 31: arrow
- 34: flexible struts
- 36, 136: displaceable extremity
- 38, 138: fixed extremity
- 40, 50, 140: Bowden cable
- 42, 142: conduit of Bowden cable
- 44, 144: cable of Bowden cable
- 46, 146: Bowden cable conduit end fitting
- 48, 148: cable end fitting
- 60, 160: actuator
- 62: hand wheel
- 110: bended first metal wire
- 112: second metal wire
- 112: upper connection points, hooks
- 114: support element
- 116: lower connection point
- 131: lateral fingers
- 133: central holes
- 135: lateral holes
- 134: receptacle
- 148: cable end fitting

## Claims

1. A lumbar support system (1) comprising:
a. a flexible body (30);
b. a support structure (20), which can be assembled into a seat backrest frame (2), wherein the flexible body (30) is fixed at one extremity (38) thereof at the support structure (20) and displaceable at the other extremity (36);
c. at least one Bowden cable (40, 50) comprising a cable (44) and a conduit (42);
d. wherein the Bowden cable (40, 50) comprises a Bowden cable conduit end fitting (46) which is mounted vertically on the support structure (20);
e. wherein said cable (44) connects the displaceable extremity (36) of the flexible body (30) with a fixed point (28) on the support structure (20);
f. wherein an angle (α) between the displaceable extremity (36) of the flexible body (30) and the Bowden cable conduit end fitting (46) changes during adjustment of the flexible body (30);
g. wherein the support structure (20) has a receptacle (28) for receiving the Bowden cable conduit end fitting (46), which receptacle (28) has a V-shaped clear cross-section to allow angular variations of the Bowden cable conduit end fitting (46), such that the portion of said cable (44) connecting the displaceable extremity (36) of the flexible body (30) with the fixed point (28) of the support structure (20) is co-linear to the corresponding Bowden cable conduit end fitting (46) in every adjustment position of the flexible body (30).

2. A lumbar support system (100) comprising:
a. a flexible body (130);
b. a support structure (120) ), which can be assembled into a seat backrest frame (2), wherein the flexible body (130) is fixed at one extremity (138) thereof at the support structure (120) and displaceable at the other extremity (136);
c. at least one Bowden cable (140) comprising a cable (144) and a conduit (142);
d. wherein the Bowden cable (140) comprises a Bowden cable conduit end fitting (146) which is mounted vertically on the flexible body (130);
e. wherein said cable (144) connects the displaceable extremity (136) of the flexible body (130) with a fixed point (128) on the support structure (120); and
f. wherein an angle (α) between the displaceable extremity (136) of the flexible body (130) and the Bowden cable conduit end fitting (146) changes during adjustment of the flexible body (130); and
g. wherein the flexible body (130) has a receptacle (134) for receiving the Bowden cable conduit end fitting (146), which receptacle (134) is arranged at a flexible strap (132) of the flexible body (130) to allow angular variations (α) between the Bowden cable conduit end fitting (134) and the displaceable extremity (136) of the flexible body (130), such that the portion of said cable (144) connecting the displaceable extremity (136) of the flexible body (130) with the fixed point (128) of the support structure (120) is co-linear to the corresponding Bowden cable conduit end fitting (146) in every adjustment position of the flexible body (130).

3. The lumbar support system according to claim 1 or 2, wherein the angle (α) between the displaceable extremity (36, 136) of the flexible body (30, 130) and the Bowden cable conduit end fitting (46, 146) increases when the flexible body (30, 130) is curved to a greater extend.

4. The lumbar support system according to one of the claims 1 to 3, wherein the angle (α) between the displaceable extremity (36, 136) of the flexible body (30, 130) and the Bowden cable conduit end fitting (46, 146) increases when the length (d) of cable (44, 144) connecting the displaceable extremity (36, 136) of the flexible body (30, 130) with the fixed point (28, 128) on the support structure (20, 120) is shortened.

5. The lumbar support system according to one of the claims 1, 3 or 4, wherein the Bowden cable conduit end fitting (46) is attached to the support structure (20), wherein an angle (β) between the Bowden cable conduit end fitting (46) and the support structure (20) varies during adjustment of the flexible body (30).

6. The lumbar support system according to one of the claims 1, or 3 to 5, wherein the support structure (20) is an integral plastic bridge element (20) attached to a surrounding metal wire frame (10) that can be assembled into a seat backrest frame (2).

7. The lumbar support system according to claim 6, wherein the plastic bridge element (20) has integral top connecting elements (22), which are clipped on the metal wire frame (10) with a lateral freedom.

8. The lumbar support system according to one of the claims 6 or 7, wherein the plastic bridge element (20) is constrained on the metal wire frame (10) by bottom connecting elements (24) between two V-shaped bendings (16) on lateral wires (18) of the wire frame (10).

9. The lumbar support system according to one of the claims 6 to 8, wherein the lumbar support structure (1) is mounted into the seat backrest frame (2) by hooks (14), which are arranged perpendicular to the plane of the metal wire frame (10).

10. The lumbar support system according to claim 2, wherein the support structure (120) comprises a first bended metal wire (110) of staggered U-shape, which is overmolded with plastics on interface areas with the seat backrest frame (2) and wherein the first bended metal wire (110) is mounted on the seat backrest frame (2) at two upper connection points (112) and one lower connection point (116).

11. The lumbar support system according to claim 10, wherein a second metal wire (111) is attached to the first metal wire (110) by overmolding with plastics on a lower end of first metal wire (110), wherein the second metal wire (111) supports an overmolded receptacle (128) for mounting a cable end fitting (148).

## Patentansprüche

1. Lordosenstützsystem (1), aufweisend:
a. einen flexiblen Körper (30);
b. eine Stützstruktur (20), welche in einen Rückenlehnenrahmen (2) eingebaut werden kann, wobei der flexible Körper (30) an einem Ende (38) davon an der Stützstruktur (20) befestigt ist und an dem anderen Ende (36) verschiebbar ist;
c. mindestens einen Bowdenzug (40, 50), aufweisend ein Seil (44) und eine Hülle (42),
d. wobei der Bowdenzug (40, 50) ein Bowdenzughüllenendfitting (46) aufweist, welches vertikal an der Stützstruktur (20) befestigt ist,
e. wobei das Seil (44) das verschiebbare Ende (36) des flexiblen Körpers (30) mit einem festen Punkt (28) an der Stützstruktur (20) verbindet,
f. wobei sich ein Winkel (α) zwischen dem verschiebbaren Ende (36) des flexiblen Körpers (30) und dem Bowdenzughüllenendfitting (46) während der Einstellung des flexiblen Körpers (30) ändert;
g. wobei die Stützstruktur (20) eine Aufnahme (28) zum Aufnehmen des Bowdenzughüllenendfittings (46) aufweist, wobei die Aufnahme (28) einen V-förmigen freien Querschnitt aufweist, um Winkelveränderungen des Bowdenzughüllenendfittings (46) zu erlauben, so dass der Teil des Seils (44), welcher das verschiebbare Ende (36) des flexiblen Körpers (30) mit dem festen Punkt (28) der Stützstruktur (20) verbindet, in jeder Einstellungsposition des flexiblen Körpers (30) kolinear zu dem entsprechenden Bowdenzughüllenendfitting (46) ist.

2. Lordosenstützsystem (100), aufweisend:
a. einen flexiblen Körper (130);
b. eine Stützstruktur (120), welche in einen Rückenlehnenrahmen (2) eingebaut werden kann, wobei der flexible Körper (130) an einem Ende (138) davon an der Stützstruktur (120) befestigt ist und an dem anderen Ende (136) verschiebbar ist;
c. mindestens einen Bowdenzug (140), aufweisend ein Seil (144) und eine Hülle (142),
d. wobei der Bowdenzug (140) ein Bowdenzughüllenendfitting (146) aufweist, welches vertikal an dem flexiblen Körper (130) befestigt ist,
e. wobei das Seil (144) das verschiebbare Ende (136) des flexiblen Körpers (130) mit einem festen Punkt (128) an der Stützstruktur (120) verbindet, und
f. wobei sich ein Winkel (α) zwischen dem verschiebbaren Ende (136) des flexiblen Körpers (130) und dem Bowdenzughüllenendfitting (146) während der Einstellung des flexiblen Körpers (130) ändert; und
g. wobei der flexible Körper (130) eine Aufnahme (134) zum Aufnehmen des Bowdenzughüllenendfittings (146) aufweist, wobei die Aufnahme (134) an einem flexiblen Streifen (132) des flexiblen Körpers (130) angeordnet ist, um Winkelveränderungen (α) zwischen dem Bowdenzughüllenendfitting (134) und dem verschiebbaren Ende (136) des flexiblen Körpers (130) zu erlauben, so dass der Teil des Seils (144), welcher das verschiebbare Ende (136) des flexiblen Körpers (130) mit dem festen Punkt (128) der Stützstruktur (120) verbindet, in jeder Einstellungsposition des flexiblen Körpers (130) kolinear zu dem entsprechenden Bowdenzughüllenendfitting (146) ist.

3. Lordosenstützsystem gemäß einem der Ansprüche 1 oder 2, wobei sich der Winkel (α) zwischen dem verschiebbaren Ende (36, 36) des flexiblen Körpers (30, 130) und dem Bowdenzughüllenendfitting (46, 146) vergrößert, wenn der flexible Körper (30, 130) in einem größeren Maße gebogen wird.

4. Lordosenstützsystem gemäß einem der Ansprüche 1 bis 3, wobei sich der Winkel (α) zwischen dem verschiebbaren Ende (36, 136) des flexiblen Körpers (30, 130) und dem Bowdenzughüllenendfitting (46, 146) vergrößert, wenn die Länge (d) des Seils (44, 144), welches das verschiebbare Ende (36, 36) des flexiblen Körpers (30, 30) mit dem festen Punkt (28, 128) an der Stützstruktur (20, 120) verbindet, verkürzt wird.

5. Lordosenstützsystem gemäß einem der Ansprüche 1, 3 oder 4, wobei das Bowdenzughüllenendfitting (46) an der Stützstruktur (20) befestigt ist, wobei sich ein Winkel (β) zwischen dem Bowdenzughüllenendfitting (46) und der Stützstruktur (20) während der Einstellung des flexiblen Körpers (30) verändert.

6. Lordosenstützsystem gemäß einem der Ansprüche 1 oder 3 bis 5, wobei die Stützstruktur (20) ein einteiliges Plastikbrückenelement (20) ist, welches an einem umgebenden Metalldrahtrahmen (10) befestigt ist, welcher in einen Rückenlehnenrahmen (2) eingebaut werden kann.

7. Lordosenstützsystem gemäß Anspruch 6, wobei das Plastikbrückenelement (20) integrale obere Verbindungselemente (22) aufweist, welche mit seitlichem Spiel an dem Metalldrahtrahmen (10) befestigt werden.

8. Lordosenstützsystem gemäß einem der Ansprüche 6 oder 7, wobei das Plastikbrückenelement (20) an dem Metalldrahtrahmen (10) von unteren Verbindungselementen (24) zwischen zwei V-förmigen Biegungen (16) an seitlichen Drähten (18) des Drahtrahmens (10) beschränkt wird.

9. Lordosenstützsystem gemäß einem der Ansprüche 6 bis 8, wobei die Lordosenstützstruktur (1) in einem Rückenlehnenrahmen (2) mit Hilfe von Haken (14) befestigt ist, welche senkrecht zu der Ebene des Metalldrahtrahmens (10) angeordnet sind.

10. Lordosenstützsystem gemäß Anspruch 2, wobei die Stützstruktur (120) einen ersten gebogenen Metalldraht (110) mit einer abgestuften U-Form aufweist, welcher an Schnittstellenbereichen zu dem Rückenlehnenrahmen (2) mit Kunststoff umspritzt ist, und wobei der erste gebogene Metalldraht (110) an dem Rückenlehnenrahmen (2) an zwei oberen Verbindungspunkten (112) und an einem unteren Verbindungspunkt (116) befestigt ist.

11. Lordosenstützsystem gemäß Anspruch 10, wobei ein zweiter Metalldraht (111) an dem ersten Metalldraht (110) befestigt ist, indem er an einem unteren Ende des ersten Metalldrahts (110) mit Kunststoff umspritzt ist, wobei der zweite Metalldraht (111) eine angespritzte Aufnahme (128) zum Befestigen eines Bowdenzughüllenendfittings (148) trägt.

## Revendications

1. Un système de support lombaire (1), comprenant :
a. un corps flexible (30) ;
b. une structure de support (20) qui peut être assemblée à l'intérieur d'un cadre de dossier de siège (2), le corps flexible (30) étant fixé à une extrémité (38) de celui-ci à la structure de support (20) et étant déplaçable à l'autre extrémité (36) ;
c. au moins un câble Bowden (40, 50) comprenant un câble (44) et une gaine (42);
d. dans lequel le câble Bowden (40, 50) comprend un accessoire d'extrémité de gaine de câble Bowden (46) qui est monté verticalement sur la structure de support (20) ;
e. dans lequel ledit câble (44) relie l'extrémité déplaçable (36) du corps flexible (30) à un point fixe (28) sur la structure de support (20) ;
f. dans lequel un angle (α) entre l'extrémité déplaçable (36) du corps flexible (30) et l'accessoire d'extrémité de gaine de câble Bowden (46) varie pendant l'ajustement du corps flexible (30) ;
g. dans lequel la structure de support (20) possède un réceptacle (28) pour recevoir l'accessoire d'extrémité de gaine de câble Bowden (46), réceptacle (28) qui présente une section droite libre en forme de V pour autoriser les variations angulaires de l'accessoire d'extrémité de gaine de câble Bowden (46), de sorte que la partie dudit câble (44) reliant l'extrémité déplaçable (36) du corps flexible (30) au point fixe (28) de la structure de support (20) soit colinéaire avec l'accessoire d'extrémité de gaine de câble Bowden correspondant (46) dans chaque position d'ajustement du corps flexible (30).

2. Un système de support lombaire (100) comprenant :
a. un corps flexible (130) ;
b. une structure de support (120) qui peut être assemblée à l'intérieur d'un cadre de dossier de siège (2), le corps flexible (130) étant fixé à une extrémité (138) de celui-ci à la structure de support (120) et étant déplaçable à l'autre extrémité (136) ;
c. au moins un câble Bowden (140) comprenant un câble (144) et une gaine (142) ;
d. dans lequel le câble Bowden (140) comprend un accessoire d'extrémité de gaine de câble Bowden (146) qui est monté verticalement sur le corps flexible (130) ;
e. dans lequel ledit câble (144) relie l'extrémité déplaçable (136) du corps flexible (130) à un point fixe (128) sur la structure de support (120) ; et
f. dans lequel un angle (α) entre l'extrémité déplaçable (136) du corps flexible (130) et l'accessoire d'extrémité de gaine de câble Bowden (146) varie pendant l'ajustement du corps flexible (130) ;
g. dans lequel le corps flexible (130) possède un réceptacle (134) pour recevoir l'accessoire d'extrémité de gaine de câble Bowden (146), réceptacle (134) qui est disposé à l'endroit d'une sangle flexible (132) du corps flexible (130) pour autoriser des variations angulaires (α) entre l'accessoire d'extrémité de gaine de câble Bowden (134) et l'extrémité déplaçable (136) du corps flexible (130), de sorte que la partie dudit câble (144) reliant l'extrémité déplaçable (136) du corps flexible (130) au point fixe (128) de la structure de support (120) soit colinéaire avec l'accessoire d'extrémité de gaine de câble Bowden correspondant (146) pour toute position d'ajustement du corps flexible (130).

3. Le système de support lombaire de la revendication 1 ou 2, dans lequel l'angle (α) entre l'extrémité déplaçable (36, 136) du corps flexible (30, 30) et l'accessoire d'extrémité de gaine de câble Bowden (46, 46) augmente lorsque le corps flexible (30, 130) est courbé de façon plus importante.

4. Le système de support lombaire de l'une des revendications 1 à 3, dans lequel l'angle (a) entre l'extrémité déplaçable (36, 136) du corps flexible (30, 30) et l'accessoire d'extrémité de gaine de câble Bowden (46, 46) augmente lorsque diminue la longueur (d) du câble (44, 144) reliant l'extrémité déplaçable (36, 36) du corps flexible (30, 130) au point fixe (28, 128) sur la structure de support (20, 120).

5. Le système de support lombaire de l'une des revendications 1, 3 ou 4, dans lequel l'accessoire d'extrémité de gaine de câble Bowden (46) est solidarisé à la structure de support (20), dans lequel un angle (β) entre l'accessoire d'extrémité de gaine de câble Bowden (46) et la structure de support (20) varie pendant l'ajustement du corps flexible (30).

6. Le système de support lombaire de l'une des revendications 1, ou 3 à 5, dans lequel la structure de support (20) est un élément de pont en matière plastique monobloc (20) solidarisé à un cadre en fil métallique qui l'entoure (30) et peut être assemblé dans un cadre de dossier de siège (2).

7. Le système de support lombaire de la revendication 6, dans lequel l'élément de pont en matière plastique (20) possède des éléments de liaison supérieurs monoblocs (22) qui sont encliquetés sur le cadre en fil métallique (10) avec une latitude de mouvement latéral.

8. Le système de support lombaire de l'une des revendications 6 ou 7, dans lequel l'élément de pont en matière plastique (20) est mis sous contrainte sur le cadre en fil métallique (10) par des éléments de liaison inférieurs (24) entre deux courbures en forme de V (16) sur des fils latéraux (18) du cadre en fil (10).

9. Le système de support lombaire de l'une des revendications 6 à 8, dans lequel la structure de support lombaire (1) est montée dans le cadre du dossier de siège (2) par des crochets (14), qui sont disposés perpendiculairement au plan du cadre en fil métallique (10).

10. Le système de support lombaire de la revendication 2, dans lequel la structure de support (120) comprend un premier fil métallique courbé (110) de forme en U étagée, qui est surmoulé avec de la matière plastique sur des zones d'interface avec le cadre du dossier de siège (2), et dans lequel le premier fil métallique courbé (110) est monté sur le cadre du dossier de siège (2) en deux points de liaison supérieurs (112) et un point de liaison inférieur (116).

11. Le système de support lombaire de la revendication 10, dans lequel un second fil métallique (111) est solidarisé au premier fil métallique (110) par surmoulage avec de la matière plastique sur une extrémité inférieure du premier fil métallique (110), le second fil métallique (111) supportant un réceptacle surmoulé (128) pour le montage d'un accessoire d'extrémité de câble (148).
